# EUROPEAN PATENT SPECIFICATION

(11) **EP 2 345 766 B1**
(45) Date of publication and mention of the grant of the patent: **26.07.2017**
(21) Application number: 10150634.3
(22) Date of filing: 13.01.2010
(51) Int. Cl.: B01D 17/00, E03F 5/22, E03F 11/00, C02F 3/12

(54) **Waste liquid tank**
Abwassertank
Réservoir de déchets liquides

(43) Date of publication of application: 20.07.2011
(73) Proprietor: Uponor Infra Oy, 01510 Vantaa (FI)
(72) Inventor: Päivinen, Niko, 15210, Lahti (FI); Tast, Niila, 15270, Kukkila (FI)
(74) Representative: Papula Oy

(56) References cited:
- EP-A1- 1 449 812
- EP-A1- 2 085 326
- GB-A- 2 317 170
- US-B1- 6 328 890

## Description

### FIELD OF THE INVENTION

The invention relates to a tank assembly.

### BACKGROUND OF THE INVENTION

Wastewaters may be treated in a depositing tank, for example. The depositing tank comprises different chambers, through which the wastewater flows. There are typically three chambers. The chambers may be arranged in one depositing tank by means of partition walls, or one tank may constitute one chamber, the required number of tanks being arranged in succession. In the chambers of the depositing tank, the water flows slowly, the solid particles in the water falling gravitationally onto the bottom of the chamber and the constituents lighter than water rising to the surface. The middle section of the partition wall between the chambers is provided with holes, or connecting pipes are arranged from one chamber to another, through which the clarified water in the middle of the chamber flows into the next chamber. When the wastewater has passed the last chamber, at least the majority of the solid matter therein has been deposited onto the bottom of the chambers, and the majority of the constituents lighter than water onto the surface of the water.

After the last chamber, the water, cleaned of solid matter, is led to further processing. The further processing may be for instance chemical and/or biological purification or the water could be led for cleaning to a filter field or to a sand filter. The chambers of the depositing tank are emptied of the solid matter deposited on the bottom thereof. The emptying takes place once or twice a year, for example.

Sometimes further processing has to be carried out at a site that is higher than the last chamber in the depositing tank. Such a situation arises for instance when the filter field has to be placed higher than the depositing tank. The immediate surroundings of the depositing tank may also be for instance so stony or rocky that the filter field has to be placed quite far from the depositing tank, the water having to be transferred to the filter field by pumping to ensure the operation. This is typically arranged by letting the water flow gravitationally from the last chamber of the depositing tank to a pump tank. A pump is arranged in the pump tank for pumping the water for further processing.

The volume of the pump tank has to be sufficient in order to ensure that a sufficiently large amount of water is pumped out. The amount of water pumped has to be sufficiently large so that for instance when filtering pipes are used, enough water can be pumped therein in order for the water to be removed from the filtering pipes along their entire length, and not only from the first part, which would be the case if only small amounts of water were pumped into the filtering pipes. This would lead to excessive loading of the first part of the filter field, and its end part would not be utilized fully. The installation of a separate pump tank naturally causes material and installation costs. In addition, a separate pump tank increases the number of manholes or riser pipes which typically are undesirable on a lawn, for example.

A solution has been presented, wherein the pump tank is placed inside the depositing tank. However, it is extremely difficult to fit a sufficiently large pump tank inside a depositing tank. If the pump tank is too broad, the chambers of the depositing tank cannot be serviced through one riser pipe. On the other hand, it is difficult to make a pump tank deep, because this also increases the total depth of the depositing tank and, consequently, the installation depth. An increased installation depth again causes costs during the installation of the tank. For example, digging the installation hole is thus quite laborious and expensive. Furthermore, the terrain could be such that, in practice, digging a deep pit is impractical for instance because of the level of groundwater.

EP 1449812 discloses a solution wherein the pump tank is placed inside a waste liquid tank, for example. The waste liquid tank is manufactured such that the pump tank and partition walls are positioned inside a mould and the waste liquid tank is formed by rotational moulding around the pump tank and the partition walls. It is rather challenging to perform the moulding process because of the thermal expansion of the partition walls. Further, it is also challenging to ensure that the pump tank is leak-proof inside the waste liquid tank. EP 2 085 326 A1 discloses a tank assembly according to the preamble of claim 1.

### BRIEF DESCRIPTION OF THE INVENTION

The object of the present invention is to provide a novel solution.

The solution of the invention is characterized by what is stated in the independent claim.

A waste liquid tank disclosed herein comprises at least two chambers and a riser pipe. The riser pipe is arranged such that the waste liquid tank and the pump tank in connection with the waste liquid tank can be serviced through the same riser pipe. The pump tank is, however, positioned outside the outer wall of the waste liquid tank. The outer wall of the waste liquid tank and the outer wall of the pump tank contact each other at least partly. Thus, only one riser pipe is needed for the waste liquid tank and pump tank. Further, only one installation hole for the waste liquid tank and the pump tank is needed because they are close to each other. Yet further, because the pump tank is positioned outside the outer wall of the waste liquid tank, it is easy and simple to avoid leakage from the pump tank into the waste liquid tank or vice versa. Because the outer wall of the waste liquid tank and the outer wall of the pump tank at least partly contact each other, the walls of the tanks need not be very thick because the tanks support each other. The waste liquid tank comprises at least two chambers which are separated by a partition wall formed of inner outer walls, whereby the pump tank is at least partly positioned outside of the inner outer walls and thereby at least partly between the chambers of the waste liquid tank. According to the invention, the pump tank is at least partly under the waste liquid tank. Such a solution is very compact and the pump tank supports the waste liquid tank. Such a solution also provides the advantages that the partition walls can be formed freely such that the strength properties of the tank can be enhanced so as to avoid the buckling of the tank. It is also rather easy to form a suitable space for the pump tank. Further, it is possible to form the walls such that the pump tank and waste liquid tank support each other extremely well.

According to an embodiment, the pump tank is at least partly surrounded by the waste liquid tank. In such a solution, it is simple and easy to ensure that the riser pipe is in a leak-proof manner arranged in connection with the waste liquid tank. This description further presents a pump, which does not form part of the claimed subject-matter, with a swimmer switch having a float element. The pumping capacity of the pump is increased by making the cable between the pump and the float element rather long. The swimmer switch is reliable despite of the length of the cable, because the cable is further provided with an intermediate float element.

### BRIEF DESCRIPTION OF THE DRAWINGS

In the following, the invention will be described in greater detail by means of preferred embodiments with reference to the attached drawings, in which
Figure 1 shows a side view in cross-section of a waste liquid tank and a pump tank;
Figure 2 schematically shows an isometric view of a waste liquid tank according to a second embodiment;
Figure 3 schematically shows an isometric view of a pump tank used in connection with the waste liquid tank according to Figure 2;
Figure 4 schematically shows a side view of the waste liquid tank shown in Figure 2;
Figure 5 schematically shows a bottom view of the waste liquid tank shown in Figure 2 and
Figure 6 schematically shows a bottom view of the waste liquid tank shown in Figure 2 and the pump tank shown in Figure 3 assembled together.

For the sake of clarity, embodiments of the invention are simplified in the figures. Like parts are denoted with like reference numbers in the figures.

### DETAILED DESCRIPTION OF THE INVENTION

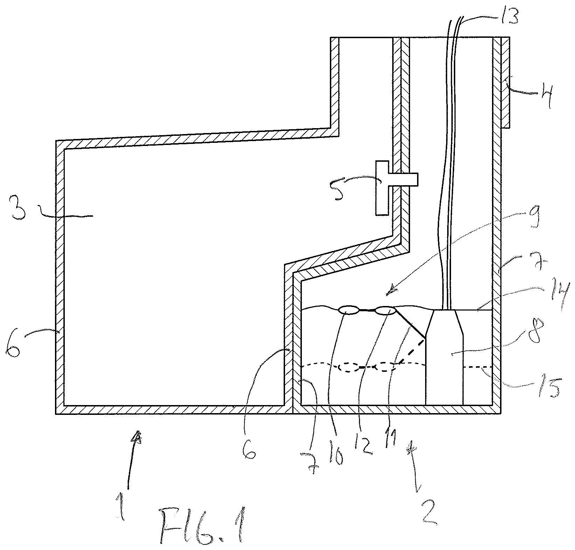

Figure 1 shows a waste liquid tank 1 and a pump tank 2. The waste liquid tank 1 can be a sewage tank, a chemical waste liquid purification tank or a depositing tank, for example. If the waste liquid tank 1 is a depositing tank, for example, it comprises two chambers 3 or more than two chambers as is known to a person skilled in the art.

The waste liquid tank 1 further comprises a riser pipe 4 or a manhole. The riser pipe 4 is so large that both the waste liquid tank 1 and the pump tank 2 in connection with the waste liquid tank 1 are serviced through the same riser pipe 4. Thus, only one riser pipe 4 is needed for the waste liquid tank 1 and the pump tank 2.

There is a connection from the waste liquid tank 1 to the pump tank 2. In the embodiment shown in Figure 1, this connection is a T-piece fitting 5 through which the waste liquid is allowed to flow into the pump tank 2.

Although the waste liquid tank 1 and the pump tank 2 are serviced through the same riser pipe 4, the pump tank 2 is positioned outside the outer wall 6 of the waste liquid tank 1. The outer wall 6 of the waste liquid tank and the outer wall 7 of the pump tank 2 partly contact each other, however. Thus, the contacting outer walls 6 and 7 support each other and therefore the wall does not have to be very thick.

The pump tank 2 is also partly positioned under the waste liquid tank 1. Thereby the waste liquid tank 1 is partly supported by the pump tank 2. Further, the volume of the pump tank can be increased and yet the pit or hole to be digged for the waste liquid tank 1 and the pump tank 2 is moderate in shape and size.

The pump tank 2 is provided with an immersion pump 8. The immersion pump 8 is provided with a swimmer switch 9. The swimmer switch 9 comprises a float element 10 and a cable 11 connecting the float element 10 to the immersion pump 8. When a sufficient amount of liquid enters the pump tank 2, the float element 10 of the swimmer switch 9 rises upwards and starts the immersion pump 8. The immersion pump 8 pumps the liquid out along an outlet pipe 13. When the float element 10 of the swimmer switch 9 sinks downward as the liquid level drops, it stops the operation of the immersion pump 8 once it has descended sufficiently low.

In this embodiment, the cable 11 between the immersion pump 8 and the float element 10 is further provided with an intermediate float element 12. The intermediate float element 12 enables an increase in the pumping capacity of the immersion pump 8. As is shown in Figure 1, due to the intermediate float element 12 the float element 10 is horizontal although the float element 10 floats on the upper liquid level 14. Thus, more liquid can be filled into the pump tank 2 before the float element 10 turns upwards such that it starts the immersion pump to empty the pump tank 2. Further, as is shown with dashed lines in Figure 1, when the float element 10 sinks to the lower liquid level 15, it then also floats horizontally and thus does not yet stop the immersion pump 8. Thus, the immersion pump 8 must pump more liquid out of the pump tank before the float element 10 sinks to such a level that it stops the immersion pump 8. Further, due to the intermediate float element 12 the cable 11 can be rather long and, despite the length of the cable, the swimmer switch 9 is reliable.

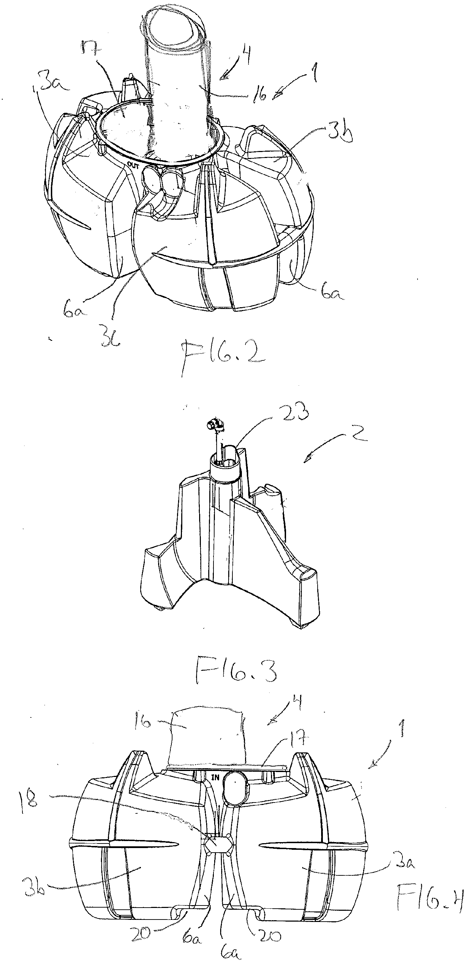

Figure 2 shows an embodiment of a waste liquid tank 1 which can be used as a septic tank, for example. The waste liquid tank 1 comprises chambers 3a, 3b and 3c.

The chambers 3a, 3b and 3c are separated by partition walls formed of inner outer walls 6a. An inner outer wall 6a is formed such that it faces another inner outer wall 6a, whereby there is a gap between these two inner outer walls 6a facing each other. Thus, partition walls are formed by rotational moulding, for example, such that the waste liquid tank 1 is provided with inner outer walls 6a.

The outer surface of the pump tank 2 shown in Figure 3 is formed such that it conforms to the size and shape of the inner outer walls 6a. Thus the pump tank 2 shown in Figure 3 is positioned between the chambers 3a, 3b and 3c of the waste liquid tank 1 shown in Figure 2. Thus the pump tank 2 is positioned outside the inner outer walls 6a of the waste liquid tank 1.

The pump tank 2 and the waste liquid tank 1 can be attached together by plastic welding, for example. The pump tank 2 and the waste liquid tank 1 can also be attached together mechanically. However, in some examples not forming part of the claimed subject-matter it is not necessary to connect or attach the pump tank 2 and the waste liquid tank together at all.

In the embodiment shown in Figure 2, the riser pipe 4 comprises a tube part 16 and a base 17. The outer dimensions of the base 17 are larger than the outer dimensions of the tube part 16 seen in the axial direction of the tube part 16.

Figure 4 shows a connection 18 from the chamber 3a to the chamber 3b. The connection 18 between the chambers can be a pipe or hole. It is possible to make the connections between the chambers during the manufacture of the waste liquid tank 1 when the waste liquid tank 1 is made by rotational moulding, for example.

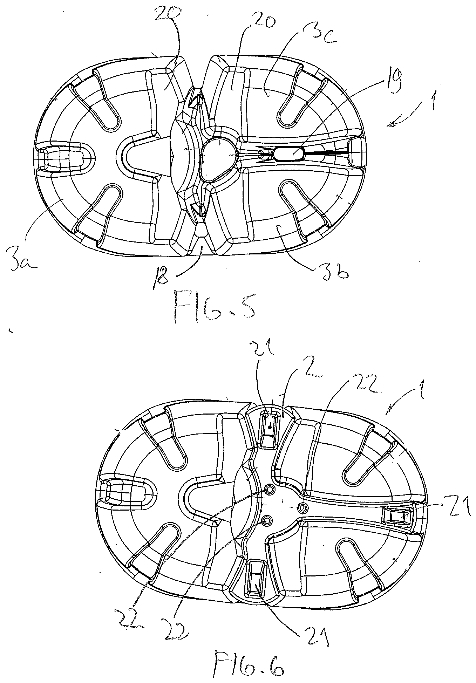

The waste liquid tank 1 can be provided with through-holes 19 from the top of the waste liquid tank to the bottom of the waste liquid tank as shown in Figure 5. In an example not forming part of the claimed subject-matter, if the waste liquid tank is assembled without a pump tank 2, the bottom part between the inner outer walls 6a can be filled with sand, for example, through these holes 19.

The bottom of the waste liquid tank 1 can be provided with recesses 20 such that the forks of a fork lift can be easily positioned under the waste liquid tank 1.

The bottom of the pump tank 2 can be provided with downward protruding protrusions 21 as shown in Figure 6, for example. Figure 6 further shows recesses 22 which form upward protruding protrusions inside the pump tank 2. The recesses 22 form a seat for the immersion pump 8.

The upper part of the pump tank 2 comprises an opening 23 through which the immersion pump 8 can be positioned inside the pump tank 2. The opening 23 is rounded such that a circular immersion pump can be positioned inside the pump tank and yet the opening does not have to be large. However, the opening 23 is not circular but has an egg-shaped form whereby the circular immersion pump can be positioned through the larger part of the opening, and the swimmer switch 9 is directed to the smaller part of the opening 23 when the immersion pump 8 is positioned inside the pump tank 2.

For the sake of clarity, the connection from one of the chambers to the pump tank 2 is not shown in Figures 2 to 6.

In some cases, the features set forth in this description may be used as such, irrespective of other features. On the other hand, features set forth in this description may be combined, where necessary, to provide various combinations.

It will be obvious to a person skilled in the art that, as the technology advances, the inventive concept can be implemented in various ways. The invention and its embodiments are not limited to the examples described above but may vary within the scope of the claims.

## Claims

1. A tank assembly comprising a waste liquid tank (1), a riser pipe (4), and a pump tank (2) in connection with the waste liquid tank (1), the riser pipe (4) being arranged such that the waste liquid tank (1) and the pump tank (2) can be serviced through the same riser pipe (4), the pump tank (2) is positioned outside the outer wall (6a) of the waste liquid tank (1) and the outer wall (6) of the waste liquid tank (1) and the outer wall (7) of the pump tank (2) at least partly contact each other, the waste liquid tank (1) comprising at least two chambers (3a, 3b, 3c) which are separated by a partition wall which is formed of inner outer walls (6a), and the pump tank (2) being at least partly positioned outside the inner outer walls (6a) and at least partly between the chambers (3a, 3b, 3c) of the waste liquid tank (1), **characterized in that** the pump tank (2) is at least partly under the waste liquid tank (1).

2. The tank assembly according to claim 1, **characterized in that** the pump tank (2) is at least partly surrounded by the waste liquid tank (1).

## Patentansprüche

1. Tankanordnung aufweisend einen Abwassertank (1), ein Steigrohr (4) und einen Pumptank (2) in Verbindung mit dem Abwassertank, wobei das Steigrohr (4) derart angeordnet ist, dass der Abwassertank (1) und der Pumptank (2) durch das gleiche Steigrohr (4) unterhalten werden können, der Pumptank (2) außerhalb der Außenwand (6a) des Abwassertanks (1) positioniert ist und sich die Außenwand (6) des Abwassertanks (1) und die Außenwand (7) des Pumptanks (2) zumindest teilweise berühren, wobei der Abwassertank (1) zumindest zwei Kammern (3a, 3b, 3c) aufweist, die durch eine Trennwand getrennt sind, die aus inneren Außenwänden (6a) gebildet wird, und wobei der Pumptank (2) zumindest teilweise außerhalb der inneren Außenwände (6a) und zumindest teilweise zwischen den Kammern (3a, 3b, 3c) des Abwassertanks (1) positioniert ist, **dadurch gekennzeichnet, dass** sich der Pumptank (2) zumindest teilweise unter dem Abwassertank (1) befindet.

2. Tankanordnung nach Anspruch 1, **dadurch gekennzeichnet, dass** der Pumptank (2) zumindest teilweise von dem Abwassertank (1) umgeben ist.

## Revendications

1. Ensemble réservoir comprenant un réservoir de liquide usagé (1), une conduite montante (4) et un réservoir de pompe (2) raccordé au réservoir de liquide usagé (1), la conduite montante (4) étant disposée de façon à ce que le réservoir de liquide usagé (1) et le réservoir de pompe (2) puissent être vidangés par la même conduite montante (4), le réservoir de pompe (2) étant placé à l'extérieur de la paroi extérieure (6a) du réservoir de liquide usagé (1) et la paroi extérieure (6) du réservoir de liquide usagé (1) et la paroi extérieure (7) du réservoir de pompe (2) étant au moins partiellement en contact l'une avec l'autre, le réservoir de liquide usagé (1) comprenant au moins deux chambres (3a, 3b, 3c) qui sont séparées par une cloison de séparation par des parois extérieures intérieures (6a), et le réservoir de pompe (2) étant au moins partiellement positionné à l'extérieur des parois extérieures intérieures (6a) et au moins partiellement entre les chambres (3a, 3b, 3c) du réservoir de liquide usagé (1), **caractérisé par le fait que** le réservoir de pompe (2) est au moins partiellement placé sous le réservoir de liquide usagé (1).

2. Ensemble réservoir selon la revendication 1, **caractérisé par le fait que** le réservoir de pompe (2) est au moins partiellement entouré par le réservoir de liquide usagé (1).
